# EUROPEAN PATENT SPECIFICATION

(11) **EP 4 529 884 B1**
(45) Date of publication and mention of the grant of the patent: **09.07.2025**
(21) Application number: 22808861.3
(22) Date of filing: 01.09.2022
(51) Int. Cl.: A61C 9/00

(54) **IMPRESSION MAKING SYSTEM FOR THE MANUFACTURE OF REMOVABLE DENTAL PROSTHESES**
ABDRUCKHERSTELLUNGSSYSTEM ZUR HERSTELLUNG VON HERAUSNEHMBAREN ZAHNPROTHESEN
SYSTÈME DE PRISE D'EMPREINTE POUR LA FABRICATION DE PROTHÈSES DENTAIRES AMOVIBLES

(43) Date of publication of application: 02.04.2025
(73) Proprietor: LABORATORIO DIGITAL HIGH TEETH, S.L., 08403 Granollers Barcelona (ES)
(72) Inventor: ALSINA FONT, Francesc, 08403 GRANOLLERS (Barcelona) (ES); CARMONA CANDO, Daniel, 08403 GRANOLLERS (Barcelona) (ES); ALEMANY BOTELHO, Carolina, 08403 GRANOLLERS (Barcelona) (ES)
(74) Representative: Herrero & Asociados, S.L.
(86) International application number: PCT/ES2022/070553
(87) International publication number: WO 2024/047263

(56) References cited:
- US-B2- 10 729 521
- US-B2- 10 729 521
- US-B2- 11 116 612
- US-B2- 11 116 612

## Description

### Technical field of the invention

The present invention belongs, as its title indicates, to the technical field of dentistry, specifically, to the technical field relating to the manufacture of removable dental prostheses.

More specifically, the system of the invention is aimed at manufacturing dental prostheses both for totally edentulous people, that is, people who do not have any teeth of their own and, therefore, need a complete prosthesis or denture, as well as those unimaxillary edentulous people, that is, those who have their own teeth only in one of the jaws.

### Background of the Invention

Removable dental prostheses, also known as dentures, are external elements whose function is to replace missing teeth and periodontal tissues that the patient has been losing over time.

These prostheses, bearing artificial teeth, allow, on the one hand, both carrying out a correct chewing of food and maintaining oral aesthetics and facilitating speech and, on the other hand, they allow oral hygiene since they can be cleaned both while being placed in the mouth and easily removed from it to carry out the deepest and most exhaustive cleaning tasks.

They are also a cheaper and less invasive alternative to the also known non-removable dental implants, which are inserted by means of a screw into the patient's bone bed and, therefore, require surgical intervention and a time for healing, osseointegration, etc.

In the case of removable prostheses, two main types can also be generally distinguished based on the number of teeth they incorporate. Thus, one of them is the one in which the prosthesis does not form the complete arch due to the fact that the patient has his own pieces, so in this case said prosthesis uses the natural pieces for its fastening with the help of more or less complicated crimping systems depending on the case.

On the other hand, the other type of prosthesis would be the one that does have all the upper or lower teeth (normally 14 in the upper prosthesis and as many in the lower one) and which therefore rest and fully engage on the corresponding gum. This is the case of the prostheses needed by patients known as unimaxillary edentulous or totally edentulous people.

To date, the process of making this type of prosthesis for edentulous people, either unimaxillary or total, is somewhat laborious, mainly for two reasons. The first reason, of a technical nature, is due to the complexity of the lack of references in the patient's mouth that help to correctly design the prosthesis that allows a correct posterior positioning in the mouth and, secondly, another reason of a logistical/temporary nature, since to carry out the process correctly it is necessary for the patient to visit the clinic several times to collect data, design and adjust the prosthesis.

As an example, the conventional workflow for the manufacturing of a dental prosthesis for a totally edentulous people to date would be the following:
In a first visit, the patient goes to the clinic for the first time, where in addition to the diagnosis, an analog impression of the patient's mouth is obtained using any of the known techniques. Subsequently, this impression is sent to the laboratory to make a personalized tray to obtain a wax rim from the patient's bite.
- Subsequently, the patient goes a second time to the clinic where, thanks to the personalized tray, a bite registration is taken. If at that time the color of the teeth had not yet been chosen, it is also registered. Then, both the bite registration and the color registration are sent back to the laboratory, where a professional proceeds to carve and mount the teeth on a template.
- The template is sent back to the clinic, where the patient goes for a third visit to perform a test and check if the occlusion, aesthetics, centric relation, vertical dimension and phonation are correct.
- If everything is correct, the template is sent back to the laboratory, where the prosthesis is obtained by traditional flasking and pouring or injection, as well as for final grinding and polishing.
- Finally, the patient goes to the clinic a fourth time for delivery and final placement of the finished prosthesis, assuming, however, that there are no defects or additional corrections or adjustments to be made, in which case the number of visits would be even greater.

In view of the foregoing, it is evident that the commonly used process for manufacturing dental prostheses for totally edentulous people suffers from significant drawbacks. Leaving aside the obvious inconvenience caused to the patient by the numerous visits that have to be made to the clinic, this process also suffers from other technical aspects, such as, for example, the preparation time, the need to have an experienced professional to carry out the carving and assembly of the teeth or the increased handling of the prosthesis, which increases the risk of colonization of microorganisms on its surface.

However, even though these drawbacks are important, similar to those faced by unimaxillary edentulous patients, even more so is the fact that, to date, many of these operations performed in the clinic are done without ensuring a certain level of quality, leaving them in the hands of the expertise of the professional in charge of taking the measurements.

Specifically, we refer to the aforementioned steps of the method in which the patient comes to the clinic both to provide his/her bite registration and to the tests performed when checking whether the templates with the teeth occlusion, aesthetics, centric relation, vertical dimension and phonation are correct.

Said tests, as it has been said, are often left to the expertise of the clinic professional, who does not follow any appropriate method of checking the alignment, occlusion and other parameters beyond the one provided by his good eye, based on experience.

Finally, documents US 10729521 and US 11116612 are known in the state of the art, which describe methods for manufacturing dentures.

### Description of the invention

The system of the present invention, as defined by the appended claims, makes it possible to overcome the main drawbacks of the state of the art mentioned above, since, in general, it allows reducing by half the number of patient visits to the clinic, simplifying the process and, in addition, it allows reducing the prosthesis manufacturing and handling time, which in turn reduces, respectively, the delivery time.

More specifically, by virtue of the technical features of the invention that will be seen below, which combines digital techniques with manual ones, benefits are obtained such as:
- Optimum aesthetics,
- Quality and sanitary control of processes and materials,
- A decrease in test phases for the patient,
- Greater productivity in the clinic, and
- A shorter rehabilitation time.

So all this results in a better experience for the dentist and the patient, greater health safety and, finally, better quality and greater repeatability.

In addition, both the system and the method of the present invention provide verification tools to the clinic staff through which they can verify that critical parameters such as, among others, the centric relation and the vertical dimension, are taken into account in the right way.

For this purpose, the impression making system of the invention for the manufacture of removable dental prostheses basically comprises at least one template with a cavity capable of housing an impression material and of being coupled to a patient's jaw to obtain an impression thereof, wherein said template comprises, in turn, positioning means that allow, among other functionalities, ensuring parallelism with respect to the bipupillary line (the one formed by the imaginary line that joins the centers of the pupils of the patient receiving the prosthesis) and the Camper's plane, as well as checking if said template is placed in the correct position with respect to the midline of the face.

Said positioning means are formed, specifically, by at least one tooth row, that is, by at least the upper tooth row in the event that the template is intended to be attached to the upper jaw of the patient or with at least the lower tooth row in the event that the template is intended to be attached to the lower jaw of the patient.

In said tooth row, the free end of the same can also define a flat surface such that it serves as a reference plane to check whether the template in which it is located keeps the mentioned parallelism with the bipupillary line and the Camper's plane, with the help of Fox plane.

Likewise, according to a possible embodiment that will be explained in detail later, there is the possibility that the positioning means are formed not by a single tooth row, but by two rows in occlusal position.

Thus, for example, in the case of the upper template, the positioning means will be formed by at least the upper incisors located in the central part and, below them, in occlusal position, at least two of the lower incisors, preferably those located in the central position.

In this way, said template, by having two tooth rows, makes it possible, in addition to evaluating the aesthetic part, as has already been said, to register the midline of the prosthesis, that is, to check if said template is placed in the correct position with respect to the midline of the face and, in addition, to check the height at which the incisal line is, that is, the lower edge of the central incisors.

Therefore, in cases where the positioning means are made up of two tooth rows, it will be the free end of the second row (the lower row if it is the template intended to be attached to the upper jaw, or the upper row if it is the template intended to be attached to the lower jaw) which defines a flat surface such that it functions as a reference plane to check whether the upper template keeps the aforementioned parallelism with the bipupillary line and the Camper's plane, with the help of Fox plane.

In addition, in order both to register the optimal vertical dimension and to define the centric relation of both templates, the system of the invention may additionally comprise a centric relation marking device capable of fitting well on one of the templates in cases in which the patient is totally edentulous and needs the use of an upper and lower template, or directly on the upper or lower teeth or dental pieces depending on whether said patient is lower or upper unimaxillary edentulous respectively.

The aforementioned centric relation can be defined as that in which the patient has his or her resting position, that is, without contact between teeth, only slightly separated, and it is considered the starting point for mandibular movements. This position is characterized by the absence of muscular involvement of the patient, so it is used as the starting position because it is the most stable and one of the easiest to reproduce.

Even more specifically, with a view to registering the optimal vertical dimension as well as defining the centric relation of both templates, the centric relation marking device comprises a height-adjustable marker element.

Thus, for an example of making an impression for a totally edentulous people, the marking process, once a first impression material has already been applied to both templates and the height of the vertical dimension has been registered, the aforementioned centric relation marking device is placed, in this example marking it on the upper template, to obtain a better adjustment and position registration. Specifically, this process would have the following steps:
- Placing the centric relation marking device on the lower template in the appropriate position depending on the type of occlusion of the patient,
- Adjusting the vertical dimension by adjusting said marking device and
- With the mouth at rest, registering (marking) the centric relation of the patient's mouth on the upper template.

Thus, once the second impression material has been applied to the templates and they have been inserted into the patient's mouth, their position can be adjusted, checking that both are optimally positioned and adjusted to each other by matching the tip of the marker element of the centric relation marking device with the place marked as optimal.

For all of the above, with the impression system of the invention a significant improvement of the state of the art is obtained, not only in terms of precision and efficiency for the professional or prosthetist who uses them, but for the patient himself/herself, who only has to visit the clinic twice, a first one for all data collection and obtaining the impressions and a second one in which the definitive prosthesis is already provided.

### Brief description of the drawings

In order to help a better understanding of the features of the invention, according to a preferred example of its practical embodiment, a series of drawings is provided as an integral part of said description, wherein, by way of illustration and not limitation, the following has been represented:
Figures 1.1, 1.2 and 1.3.- Show, respectively, bottom perspective, top perspective and front elevation views of an example of the upper template of the impression making system for the manufacture of removable dental prostheses of the invention in which the positioning means are made up of two tooth rows.
Figures 2.1 and 2.2.- Show, on the other hand, two perspective views of a possible embodiment of the invention in which the lower template has positioning means formed by one tooth row.
Figures 3.1, 3.2 and 3.3.- Show, respectively, bottom perspective, top perspective and rear elevation views of another example of the bottom template of the impression making system for the manufacture of removable dental prostheses of the invention.
Figures 4.1 and 4.2.- Show two perspective views of the support means of the centric relation marking device of the impression making system for the manufacture of removable dental prostheses of the invention.
Figures 5.1 and 5.2.- Show, respectively, two perspective views of the marker element of the centric relation marking device and its adjustment in the support means.
Figure 6.- Shows a rear perspective view of an embodiment of the impression making system for the manufacture of removable dental prostheses of the invention wherein the upper template, the lower template and the position of the centric relation marking device can be seen when it is on the bottom template.
Figures 7.1 and 7.2.- Show two perspective views of a possible embodiment of the invention for the case in which the positioning means have a removable fixing mechanism that allows them to be assembled and disassembled with respect to the upper template and the bottom template respectively.

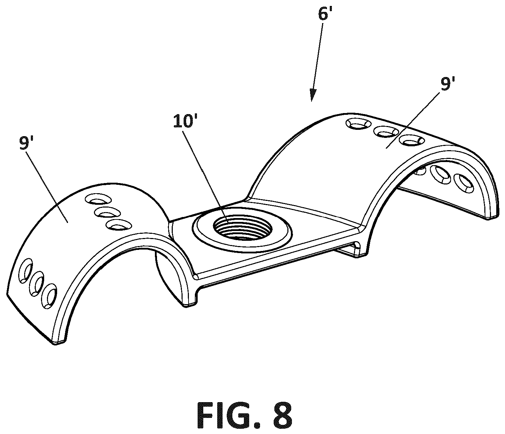

Figure 8.- Shows, finally, a perspective view of another possible embodiment of the support means of the centric relation marking device of the impression making system for the manufacture of removable dental prostheses of the invention.

### Detailed description of a preferred embodiment of the invention

In view of the figures provided, it can be seen how, in a preferred embodiment of the invention, the impression making system of the invention for the manufacture of removable dental prostheses comprises at least one template (1, 2) with a cavity (1.1, 2.1) capable of housing an impression material and adapting to a patient's jaw to obtain an impression thereof, wherein said template (1.2) comprises, in turn, positioning means that allow ensuring the parallelism thereof with respect to the bipupillary line (the one formed by the imaginary line that joins the centers of the pupils of the patient who receives the prosthesis) and the Camper's plane, as well as checking the symmetry, that is, if said template is positioned in the correct position relative to the midline of the face.

Said positioning means are formed, specifically, by at least one tooth row (3,4), that is, by at least the upper tooth row (3) in the event that the template (1) is intended to be attached to the upper jaw of the patient or with at least the lower tooth row (4) in the event that the template (2) is intended to be attached to the lower jaw of the patient.

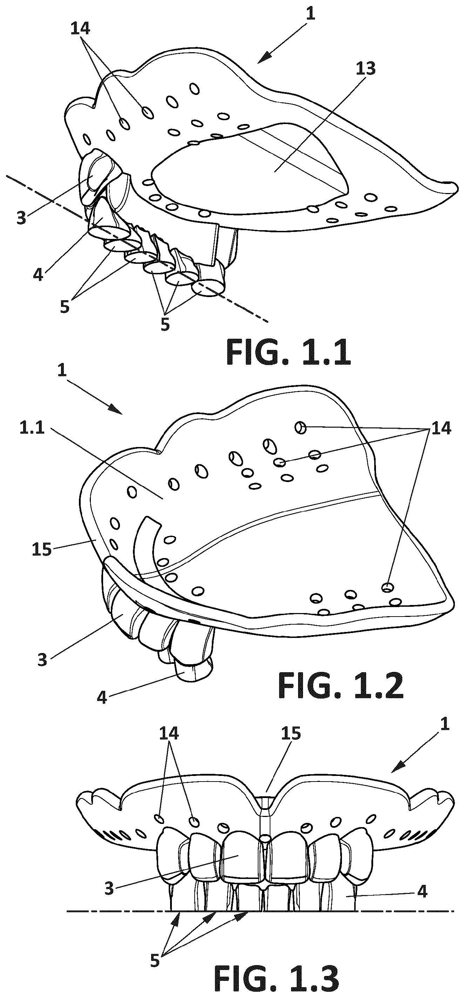

However, according to a possible embodiment shown in Figures 1.1, 1.2 and 1.3, the positioning means can be formed by two tooth rows (3,4) located one above the other in the occlusal position.

Thus, for example, in the case of the upper template shown in said Figures, the positioning means will be formed by two tooth rows in which both the upper tooth row (3) and the lower tooth row (4) are formed by the 4 incisors and the 2 canines, that is, 6 teeth per row.

However, according to another possible embodiment of the invention, not shown, the upper template (1) would comprise an upper tooth row (3) with at least the 2 upper incisors, located in the central part, and, below them, a lower tooth row (4), with at least two of the lower incisors, preferably those also located in the central position.

On the other hand, according to a possible embodiment, the free end of the tooth rows (3,4), either when there is only one or when, as in the previous example, there are two, can form or define a flat surface (5) such that it functions as a reference plane to check whether the upper template (1) keeps the aforementioned parallelism with the bipupillary line and the Camper's plane. This can especially be seen in Figures 1.1 and 1.3, in which, in the first one, said flat surface (5) is clearly visible and, in the second one, it can be seen how the horizontal line defined by the flat surface (5) could be compared, either visually or with the help of the Fox plane or a simple ruler, with the patient's bipupillary line when he/she has the upper template (1) in place in his mouth. As it is logical, in the event that, as in the aforementioned figures, two tooth rows (3, 4) are incorporated, the free end would be that of the lower tooth row (4) if it is the template intended to be attached to the upper jaw or, on the contrary, that of the upper tooth row (3) if it is the template intended to be attached to the lower jaw.

In addition, as already said, in order to register the optimum vertical dimension as well as to define their centric relation, the system of the invention may comprise, according to a possible practical embodiment, a centric relation marking device (6) that in turn, comprises a marker element (7) with a tip (7') to register the optimal position.

This centric relation marking device (6), is likely to fit well on one of the templates (1, 2) in cases where the patient is totally edentulous and needs the use of an upper (1) and lower (2) template, or directly on the upper or lower teeth or dental pieces depending on whether said patient is lower or upper unimaxillary edentulous respectively.

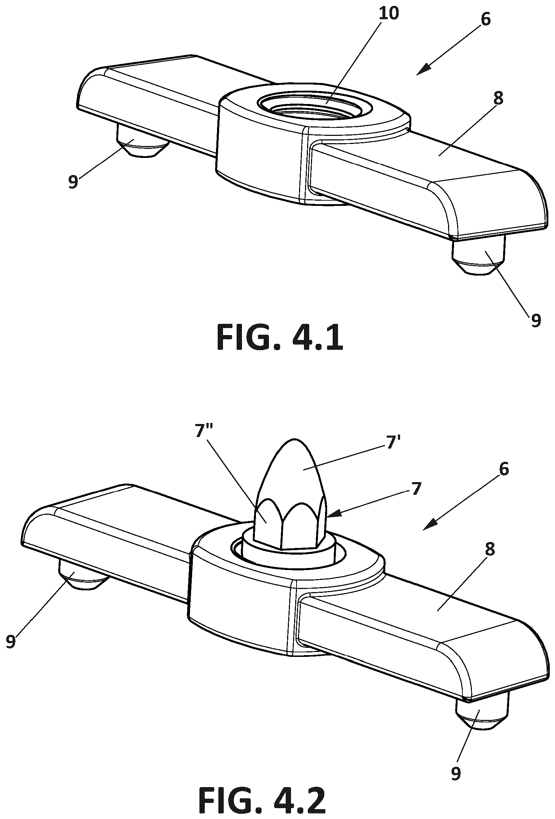

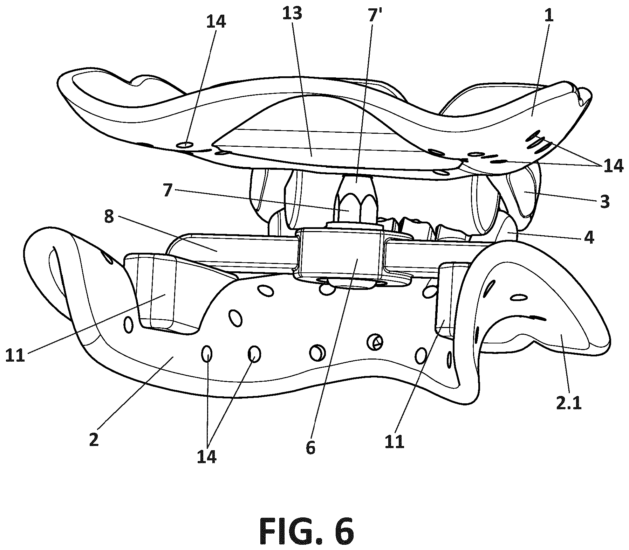

More specifically, for the case of totally edentulous people and as shown in Figures 4.1, 4.2 and 6, the centric relation marking device (6) comprises a longitudinal base (8) that has two anchors (9) at the ends of its lower surface and a central hole (10) where the marker element (7) is attached. Specifically, for the example of embodiment shown in said figures, the marker element (7) comprises a threaded area that cooperates with a complementary thread existing inside the central hole (10), which allows the marker element (7) to be positioned at different heights or depths within said central hole (10).

In this way, once the marker element (7) is located inside the central hole (10), it will be possible to vary the position of the first one by screwing it until the moment in which the tip (7') stops or touches the lower face of the upper template (1) and the previously registered vertical dimension is reached in the rest position, thus defining the vertical dimension in the set of templates.

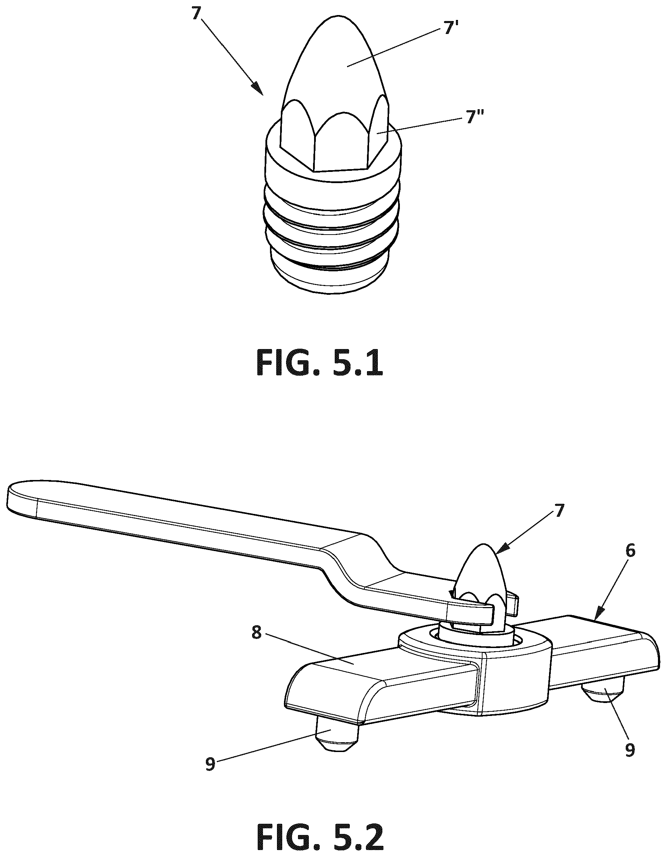

In addition, as shown in Figures 5.1 and 5.2, the marker element (7) has gripping means formed by a faceted contour (7") of hexagonal type or similar that can cooperate with a wrench and thus provide a comfortable and precise positioning of it.

However, in order both to register the optimal vertical dimension and to define the centric relation, the centric relation marking device (6) must be able to be positioned in different positions depending on the patient's bite, that is, depending on the what type of occlusion or malocclusion it has (type I, II, III).

To this end, both the upper template (1) and the lower template (2) comprise two guides (11), which in turn comprise adjustment means to, as has been said, position the centric relation marking device (6) in the appropriate place.

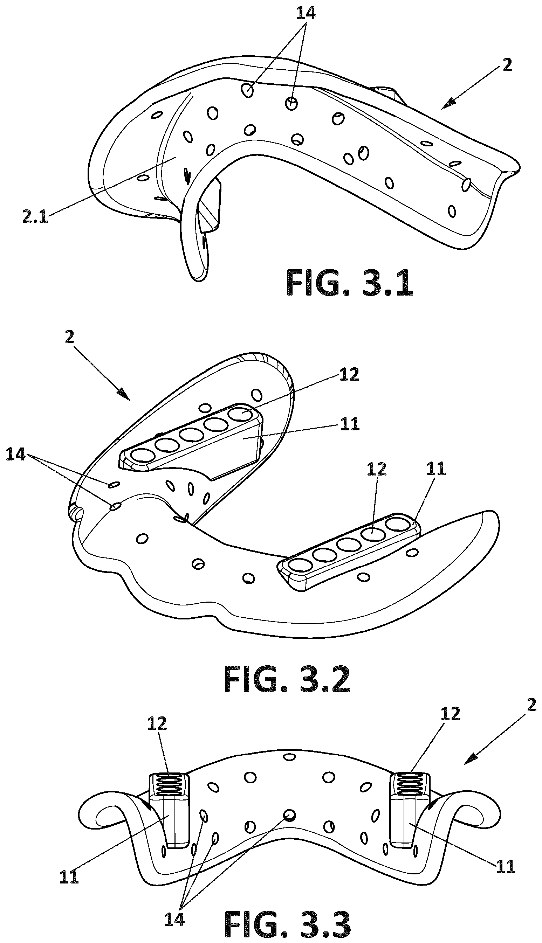

Specifically, and as can be seen in the example of embodiment shown in figures 3.2 and 3.3, wherein the adjustment means are located in the lower template (2), said adjustment means are formed by a plurality of recesses (12) in the form of circular holes to which the anchors (9), that the ends of the base (8) of the centric relation marking device (6) have, can be attached. However, for another embodiment of the invention not shown, the recesses (12) could be formed by elongated holes or, according to another possible even more versatile embodiment, also not shown in the figures, said adjustment means could be formed by an opening in the form of a longitudinal slot so that they do not have to be limited to a specific number of recesses and so that the anchors (9) can be positioned anywhere along said slot. Thus, said recesses (12) define different positions that correspond to different types of mouth according to their type of occlusion.

In addition, both the number and the separation of said recesses (12) will be determined by the dimensions of the templates (1,2), having been calculated by the applicant wherein, to cover 80-90% of the most common sizes of openings, it is enough to have 5 sizes of templates, which in turn will also affect the aforementioned means of adjustment for the centric relation marking device (6), since it is expected that in the case of the smallest size template of the set or series of 5, the recesses (12) may not coincide neither in number nor in relative distance between them with respect to the case in which the template is the largest of said series of 5.

On the other hand, the upper face of the aforementioned guides (11) forms a horizontal plane so that, once placed in the patient's mouth, their correct position with respect to the bipupillary line can be checked by checking the parallelism.

In this way, once the marker element (7) is located inside the central hole (10), it will be possible to vary the position of the first one by screwing it until its tip (7') touches or abuts, either the underside of the template upper (1) if the marker element (7) has been placed on a lower template (2) or directly on the lower jaw, or until it abuts the upper face of the lower template (2) if the marker element (7) has been placed on an upper template (1) or directly on the upper jaw and, from that moment, continue threading until reaching the previously registered vertical dimension in the rest position.

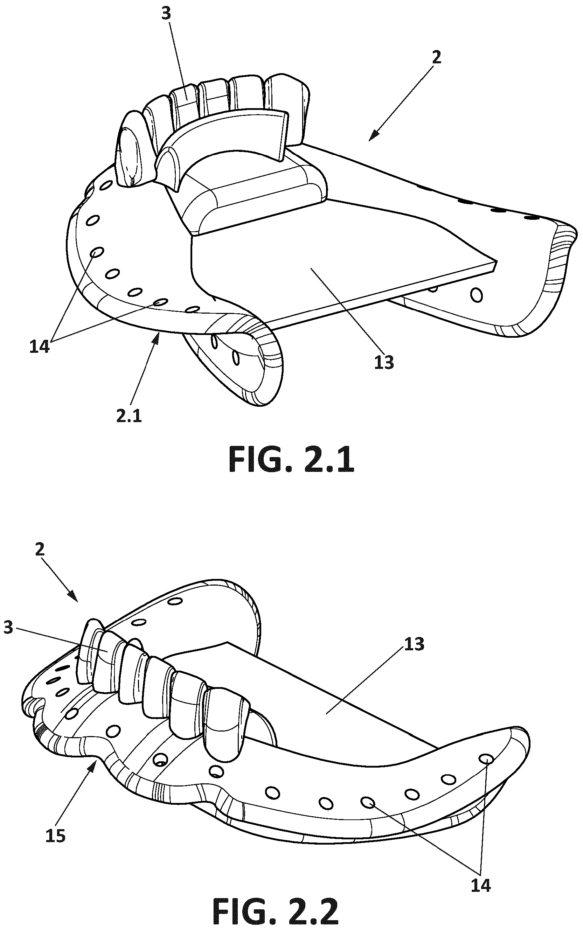

On the other hand, according to these possible embodiments, both the upper template (1) and the lower template (2) comprise a marking platform (13), preferably with a smooth surface and occupying a large central area, which can be seen in Figures 1.1 and 5 or in Figure 2, wherein the tip (7') of the marker element (7) of the centric relation marking device (6) will come to a stop. Said tip (7') may also be made of material such that it is capable of making a mark on said platform (13), for example, graphite, in order to indicate the optimal place where the centric relation is registered on said platform (13).

More specifically, the way to register or mark the centric relation is that the patient, with a relaxed mouth, must make anteroposterior movements with the jaw. Later, with the jaw placed back, he/she should make lateral movements to both sides. This will result in the tip (7') of the marker element (7) having drawn or marked a figure in the shape of an arrowhead on the aforementioned marking platform (13), thus defining, in what would be the tip of that arrow, the optimal place for registration of the vertical dimension and occlusion. Subsequently, said place will be marked on the platform (13) with any element, such as an adhesive pointer (not shown), so that its position is not lost when handling the templates (1, 2).

On the other hand, as can be seen in the examples represented in the figures, both the upper template (1) and the lower template (2) comprise a plurality of through holes (14) that allow the exit of excess impression material during impression making operations and its adherence to the templates. In addition, both in the case of the upper template (1) and the lower template (2), they have an undercut (15) on their front area that allows adaptation to the user's frenulum.

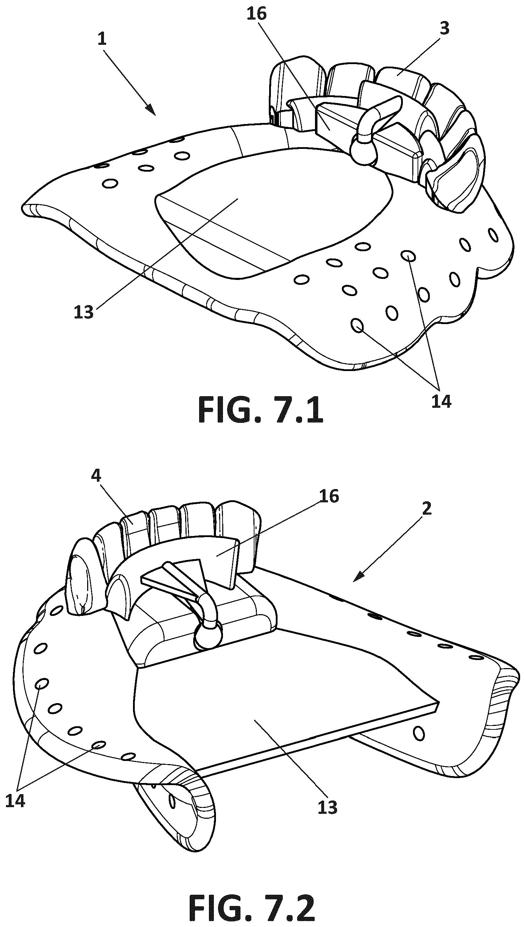

Finally, in the example carried out in Figures 7.1 and 7.2, a possible embodiment of the invention is shown for the case in which the system comprises removable fixing means (16) for joining the templates (1, 2) and their respective positioning means.

Thus, specifically, said removable fixing means (16) are formed by a tongue-and-groove system in which the template (1,2) is the one that comprises the female part and the positioning means, that is, the tooth row or rows (3,4), has the male part. However, other possible embodiments are not ruled out in which the male part is positioned in the template (1,2) and the female in the positioning means or, even, in which a removable joint system other than tongue-and-groove is used.

Even more specifically, and returning to the example shown in the figures, the removable fixing means are composed, in their male part, by a cylindrical portion that hangs or is suspended from a rib parallel to one of its generatrices and, in a complementary way, the female part is formed by a cylindrical channel in the lower part and that in its upper part has a longitudinal channel. In this way, once the cylindrical male part has been inserted by sliding, it will not be possible to extract it by pulling it upwards, since said cylindrical part will not be able to come out through the longitudinal channel of the female part, remaining trapped inside until the sliding operation is repeated in the opposite direction.

However, according to another example of embodiment not shown in the figures, it may be interesting that the tooth rows (3,4) can be placed in the templates (1,2) with some degree of freedom to correct positions with respect to their own template or with respect to the patient's existing teeth, for which, the system used would be a ball joint type or similar so as to allow relative movement between both parts.

Finally, page 8 shows an example of the centric relation marking device (6') for the case in which the patient is unimaxillary edentulous, in which case, as already stated, it will be capable of being attached directly to the upper or lower teeth or dental pieces depending on whether said patient is lower or upper unimaxillary edentulous respectively.

Thus, in this case, said centric relation marking device (6) also comprises a longitudinal base (8') such that it has two anchors (9') at the ends of its lower surface and a threaded central hole (10') where the marker element (7) is held, not shown in this figure, at different heights or depths within said central hole (10') as explained above.

For this example of embodiment, however, the anchors (9') are formed by arch portions that constitute two housings under which the patient's dental pieces will be located and which will serve as the basis for placing the aforementioned centric relation marking device (6).

## Claims

1. Impression making system for the manufacture of removable dental prostheses comprising:
- at least one template (1,2) with a cavity (1.1, 2.1) capable of housing an impression material and adapting to the jaw of a patient,
- positioning means for positioning at least said template (1,2) in the patient's mouth, the positioning means being formed by at least one tooth row (3,4), and
- a centric relation marking device (6) which in turn comprises a marker element (7) adjustable in height with a tip (7') to record the optimal position in the vertical dimension;
**characterized in that** the upper template (1) and/or the lower template (2) comprise two guides (11), which in turn comprise adjustment means to position the centric relation marking device (6).

2. Impression making system for the manufacture of removable dental prostheses according to claim 1, **characterized in that** it comprises an upper template (1) and a lower template (2),

3. Impression making system for the manufacture of removable dental prostheses according to claim 1 o 2, **characterized in that** the positioning means are formed by two tooth rows, an upper tooth row (3) and a lower tooth row (4) in occlusal position.

4. Impression making system for the manufacture of removable dental prostheses according to claim 3, **characterized in that** the upper tooth row (3) is made up of at least two teeth and the lower tooth row (4) is made up of at least two teeth.

5. Impression making system for the manufacture of removable dental prostheses according to claim 4, **characterized in that** the upper tooth row (3) is formed by the 4 upper incisors and the lower tooth row (4) is formed by at least the two lower incisors located in the central position.

6. Impression making system for the manufacture of removable dental prostheses according to any of the preceding claims, **characterized in that** the free end of the tooth rows (3,4) define a flat surface (5).

7. Impression making system for the manufacture of removable dental prostheses according to any of the preceding claims, **characterized in that** it comprises removable fixing means (16) for the connection between the templates (1, 2) and the positioning means.

8. Impression making system for the manufacture of removable dental prostheses according to claim 7, **characterized in that** the removable fixing means (16) are formed by a tongue-and-groove system where the template (1,2) is the one that includes the female part and the positioning means have the male part.

9. Impression making system for the manufacture of removable dental prostheses according to claim 7, **characterized in that** the removable fixing means (16) are formed by a system capable of allowing relative movement between the template (1,2) and the positioning means.

10. Impression making system for the manufacture of removable dental prostheses according to claim1, **characterized in that** the centric relation marking device (6) comprises a longitudinal base (8) that has two anchors (9) at the ends of its lower surface that can be coupled to the adjustment means of the templates (1, 2).

11. Impression making system for the manufacture of removable dental prostheses according to any of the claims 1 or 10, **characterized in that** the adjustment means of the guides (11) are formed by a plurality of recesses (12).

12. Impression making system for the manufacture of removable dental prostheses according to any of the claims 1 or 10, **characterized in that** the adjustment means of the guides (11) are formed by a groove.

13. Impression making system for the manufacture of removable dental prostheses according to any of the claims 1, 10, 11 or 12, **characterized in that** the marker element (7) comprises a threaded area that cooperates with a complementary thread existing inside a central hole (10) that the centric relation marking device (6) has.

14. Impression making system for the manufacture of removable dental prostheses according to any of the claims 1 or 11, **characterized in that** the guides (11) form a plane on its upper face.

15. Impression making system for the manufacture of removable dental prostheses according to any of the preceding claims, **characterized in that** the upper template (1) and/or the lower template (2) comprise a marking platform (13) that occupies a large central area thereof.

## Patentansprüche

1. Abdruckerzeugungssystem für die Herstellung einer entnehmbaren Zahnprothese, das Folgendes umfasst:
- mindestens ein Modell (1, 2) mit einem Hohlraum (1.1, 2.1), der ein Abdruckmaterial aufnehmen und an den Kiefer eines Patienten anpassen kann,
- Positionierungsmittel zum Positionieren zumindest des Modells (1, 2) im Mund des Patienten, wobei die Positionierungsmittel durch mindestens eine Zahnreihe (3, 4) gebildet sind, und
- eine Vorrichtung (6) zum Markieren einer zentrischen Relation, die ihrerseits ein höhenverstellbares Markierungselement (7) mit einer Spitze (7'), um die optimale Position in der vertikalen Dimension aufzuzeichnen, umfasst;
**dadurch gekennzeichnet, dass** das obere Modell (1) und/oder das untere Modell (2) zwei Führungen (11) umfassen, die ihrerseits Einstellungsmittel, um die Vorrichtung (6) zum Markieren einer zentrischen Relation zu positionieren, umfassen.

2. Abdruckerzeugungssystem für die Herstellung einer entnehmbaren Zahnprothese nach Anspruch 1, **dadurch gekennzeichnet, dass** es ein oberes Modell (1) und ein unteres Modell (2) umfasst.

3. Abdruckerzeugungssystem für die Herstellung einer entnehmbaren Zahnprothese nach Anspruch 1 oder 2, **dadurch gekennzeichnet, dass** die Positionierungsmittel durch zwei Zahnreihen, eine obere Zahnreihe (3) und eine untere Zahnreihe (4) in Aufbissposition, gebildet sind.

4. Abdruckerzeugungssystem für die Herstellung einer entnehmbaren Zahnprothese nach Anspruch 3, **dadurch gekennzeichnet, dass** die obere Zahnreihe (3) aus mindestens zwei Zähnen besteht und die untere Zahnreihe (4) aus mindestens zwei Zähnen besteht.

5. Abdruckerzeugungssystem für die Herstellung einer entnehmbaren Zahnprothese nach Anspruch 4, **dadurch gekennzeichnet, dass** die obere Zahnreihe (3) durch die 4 oberen Schneidezähne gebildet ist und die untere Zahnreihe (4) mindestens durch die zwei unteren Schneidezähne, die in der Mittelposition angeordnet sind, gebildet ist.

6. Abdruckerzeugungssystem für die Herstellung einer entnehmbaren Zahnprothese nach einem der vorhergehenden Ansprüche, **dadurch gekennzeichnet, dass** das freie Ende der Zahnreihen (3, 4) eine ebene Fläche (5) definiert.

7. Abdruckerzeugungssystem für die Herstellung einer entnehmbaren Zahnprothese nach einem der vorhergehenden Ansprüche, **dadurch gekennzeichnet, dass** es entnehmbare Befestigungsmittel (16) für die Verbindung zwischen den Modellen (1, 2) und den Positionierungsmitteln umfasst.

8. Abdruckerzeugungssystem für die Herstellung einer entnehmbaren Zahnprothese nach Anspruch 7, **dadurch gekennzeichnet, dass** die entnehmbaren Befestigungsmittel (16) durch ein Nut-und-Feder-System gebildet sind, wobei das Modell (1, 2) dasjenige ist, das die Nutkomponente enthält, und die Positionierungsmittel die Federkomponente aufweisen.

9. Abdruckerzeugungssystem für die Herstellung einer entnehmbaren Zahnprothese nach Anspruch 7, **dadurch gekennzeichnet, dass** die entnehmbaren Befestigungsmittel (16) durch ein System gebildet sind, das eine relative Bewegung zwischen dem Modell (1, 2) und den Positionierungsmitteln ermöglichen kann.

10. Abdruckerzeugungssystem für die Herstellung einer entnehmbaren Zahnprothese nach Anspruch 1, **dadurch gekennzeichnet, dass** die Vorrichtung (6) zum Markieren einer zentrischen Relation eine längsgestreckte Basis (8) umfasst, die zwei Anker (9) an den Enden ihrer unteren Fläche aufweist, die mit den Einstellungsmitteln der Modelle (1, 2) gekoppelt werden können.

11. Abdruckerzeugungssystem für die Herstellung einer entnehmbaren Zahnprothese nach einem der Ansprüche 1 oder 10, **dadurch gekennzeichnet, dass** die Einstellungsmittel der Führungen (11) durch mehrere Vertiefungen (12) gebildet sind.

12. Abdruckerzeugungssystem für die Herstellung einer entnehmbaren Zahnprothese nach einem der Ansprüche 1 oder 10, **dadurch gekennzeichnet, dass** die Einstellungsmittel der Führungen (11) durch eine Nut gebildet sind.

13. Abdruckerzeugungssystem für die Herstellung einer entnehmbaren Zahnprothese nach einem der Ansprüche 1, 10, 11 oder 12, **dadurch gekennzeichnet, dass** das Markierungselement (7) eine Gewindefläche umfasst, die mit einem komplementären Gewinde zusammenwirkt, das im Inneren eines mittigen Lochs (10), das die Vorrichtung (6) zum Markieren einer zentrischen Relation aufweist, vorhanden ist.

14. Abdruckerzeugungssystem für die Herstellung einer entnehmbaren Zahnprothese nach einem der Ansprüche 1 oder 11, **dadurch gekennzeichnet, dass** die Führungen (11) auf ihrer oberen Fläche eine Ebene bilden.

15. Abdruckerzeugungssystem für die Herstellung einer entnehmbaren Zahnprothese nach einem der vorhergehenden Ansprüche, **dadurch gekennzeichnet, dass** das obere Modell (1) und/oder das untere Modell (2) eine Markierungsplattform (13) umfassen, die einen großen mittleren Bereich davon einnimmt.

## Revendications

1. Système de prise d'empreinte pour la fabrication de prothèses dentaires amovibles comprenant :
- au moins un gabarit (1, 2) avec une cavité (1.1, 2.1) capable de contenir un matériau d'empreinte et de s'adapter à la mâchoire d'un patient,
- des moyens de positionnement pour positionner au moins ledit gabarit (1, 2) dans la bouche du patient, les moyens de positionnement étant formés par au moins une rangée de dents (3, 4), et
- un dispositif de marquage de relation centrée (6) qui comprend à son tour un élément de marquage (7) réglable en hauteur avec une pointe (7') pour enregistrer la position optimale dans la dimension verticale ;
**caractérisé en ce que** le gabarit supérieur (1) et/ou le gabarit inférieur (2) comprennent deux guides (11), qui à leur tour comprennent des moyens de réglage pour positionner le dispositif de marquage de relation centrée (6).

2. Système de prise d'empreinte pour la fabrication de prothèses dentaires amovibles selon la revendication 1, **caractérisé en ce qu'**il comprend un gabarit supérieur (1) et un gabarit inférieur (2).

3. Système de prise d'empreinte pour la fabrication de prothèses dentaires amovibles selon la revendication 1 ou 2, **caractérisé en ce que** les moyens de positionnement sont formés par deux rangées de dents, une rangée de dents supérieure (3) et une rangée de dents inférieure (4) en position occlusale.

4. Système de prise d'empreinte pour la fabrication de prothèses dentaires amovibles selon la revendication 3, **caractérisé en ce que** la rangée de dents supérieure (3) est faite d'au moins deux dents et que la rangée de dents inférieure (4) est faite d'au moins deux dents.

5. Système de prise d'empreinte pour la fabrication de prothèses dentaires amovibles selon la revendication 4, **caractérisé en ce que** la rangée de dents supérieure (3) est formée par les 4 incisives supérieures et la rangée de dents inférieure (4) est formée par au moins les deux incisives inférieures situées en position centrale.

6. Système de prise d'empreinte pour la fabrication de prothèses dentaires amovibles selon l'une quelconque des revendications précédentes, **caractérisé en ce que** l'extrémité libre des rangées de dents (3,4) définit une surface plane (5).

7. Système de prise d'empreinte pour la fabrication de prothèses dentaires amovibles selon l'une quelconque des revendications précédentes, **caractérisé en ce qu'**il comprend des moyens de fixation amovibles (16) pour la liaison entre les gabarits (1, 2) et les moyens de positionnement.

8. Système de prise d'empreinte pour la fabrication de prothèses dentaires amovibles selon la revendication 7, **caractérisé en ce que** les moyens de fixation amovibles (16) sont formés par un système de languette et rainure où le gabarit (1, 2) est celui qui inclut la partie femelle et les moyens de positionnement présentent la partie mâle.

9. Système de prise d'empreinte pour la fabrication de prothèses dentaires amovibles selon la revendication 7, **caractérisé en ce que** les moyens de fixation amovibles (16) sont formés par un système capable d'autoriser un mouvement relatif entre le gabarit (1, 2) et les moyens de positionnement.

10. Système de prise d'empreinte pour la fabrication de prothèses dentaires amovibles selon la revendication 1, **caractérisé en ce que** le dispositif de marquage de relation centrée (6) comprend une base longitudinale (8) qui présente aux extrémités de sa surface inférieure deux ancrages (9) pouvant être couplés aux moyens de réglage des gabarits (1, 2).

11. Système de prise d'empreinte pour la fabrication de prothèses dentaires amovibles selon l'une des revendications 1 ou 10, **caractérisé en ce que** les moyens de réglage des guides (11) sont formés par une pluralité d'évidements (12).

12. Système de prise d'empreinte pour la fabrication de prothèses dentaires amovibles selon l'une des revendications 1 ou 10, **caractérisé en ce que** les moyens de réglage des guides (11) sont formés par une rainure.

13. Système de prise d'empreinte pour la fabrication de prothèses dentaires amovibles selon l'une quelconque des revendications 1, 10, 11 ou 12, **caractérisé en ce que** l'élément de marquage (7) comprend une zone filetée qui coopère avec un filetage complémentaire existant à l'intérieur d'un trou central (10) que présente le dispositif de marquage de relation centrée (6).

14. Système de prise d'empreinte pour la fabrication de prothèses dentaires amovibles selon l'une des revendications 1 ou 11, **caractérisé en ce que** les guides (11) forment un plan sur leur face supérieure.

15. Système de prise d'empreinte pour la fabrication de prothèses dentaires amovibles selon l'une quelconque des revendications précédentes, **caractérisé en ce que** le gabarit supérieur (1) et/ou le gabarit inférieur (2) comprend une plate-forme de marquage (13) qui occupe une grande partie centrale de celui-ci.
